# EUROPEAN PATENT SPECIFICATION

(11) **EP 0 869 852 B1**
(45) Date of publication and mention of the grant of the patent: **18.10.2000**
(21) Application number: 95943011.7
(22) Date of filing: 06.12.1995
(51) Int. Cl.: B21K 21/16, B23P 6/00, B62D 21/18

(54) **REAR DRIVE M113 CONVERSION METHOD**
HINTERRADANTRIEB M113 UNWANDLUNGSVERFAHREN
METHODE DE CONVERSION D'UN M113 EN UN VEHICULE A TRANSMISSION ARRIERE

(43) Date of publication of application: 14.10.1998
(73) Proprietor: UNITED DEFENSE, L.P., Arlington, Virginia 22209 (US)
(72) Inventor: RIDDLE, Mathew, Guy, San Jose, CA 95120 (US)
(74) Representative: Altenburg, Udo, Dipl.-Phys.
(86) International application number: US9515842
(87) International publication number: WO9720650

(56) References cited:
- CH-A- 455 576
- GB-A- 1 318 145
- US-A- 4 342 146
- US-A- 4 599 780
- US-A- 4 654 946
- US-A- 4 766 660

## Description

The present invention provides a method for converting a family of the M113 vehicles to develop a low cost and light vehicle for use in scouting and other tactical missions.

The present invention is primarily concerned with the modernization of M113 family of vehicles to provide a cost effective, light and tactical vehicle. This family of vehicles has undergone various changes over the years. The present invention is distinguished in that minimal changes are made to significantly improve the operational and functional features of the M113 vehicles.

Figure 1 a perspective drawing of an M113 structure with the driver's station shown in its original position.

Figure 2A is an explosion view of an M113 structure with the rear portion removed and the rear sponson area indicated.

Figure 2B is an explosion view of an M113 structure with a new rear stowage area and a new front plate the major parts indicated.

Figure 3 is a perspective view of a modified M113 structure.

The present invention provides a method of modifying and converting an M113 vehicle to develop a low cost and light tactical vehicle for use in scouting, reconnaissance and other missions.

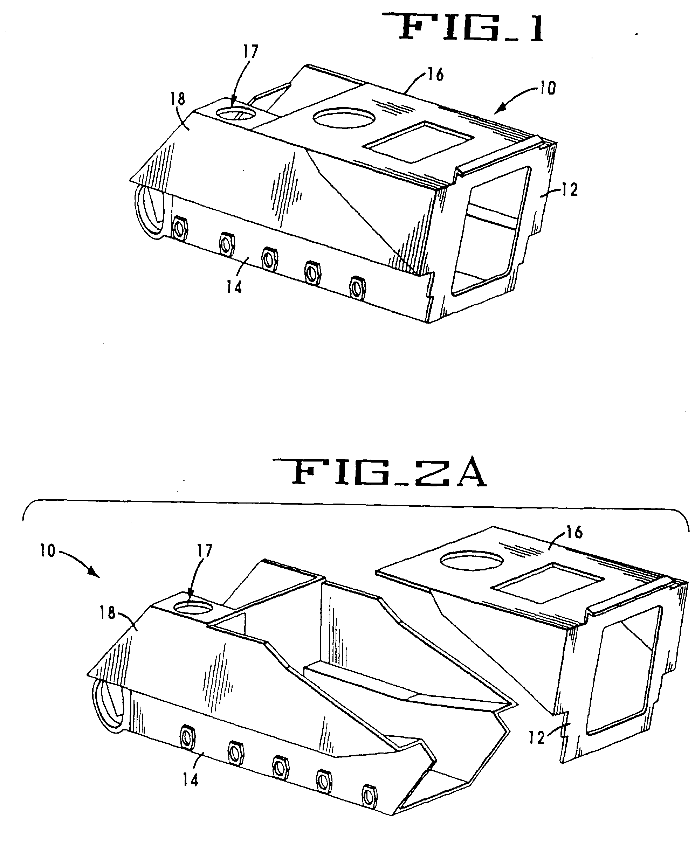

Figure 1 shows a perspective drawing of an M113 structure 10 with the driver's station shown in its original position. Figure 2A is an exploded view of structure 10. Rear plate 12 is disposed between lower hull 14 and top plate 16. Further, upper hull 18 is attached to lower hull 14.

Figure 2A shows an exploded view of an M113 structure. Rear plate 12 and top plate 16 are disengaged from upper hull 18 and lower hull 14.

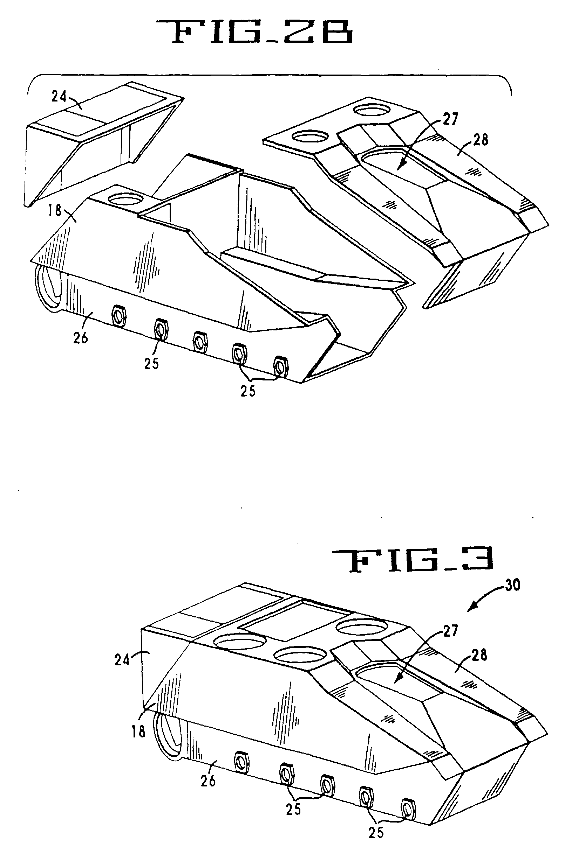

Figure 2B is an explosion view of a modified M113 vehicle. New stowage area 24 and modified lower hull 26 are matched to new front plate 28. Figure 3 shows an assembly 30 of a modified rear drive M113 vehicle.

The discussion hereinabove relates to the most significant structural and component organizations of the rear drive M113 conversion. The method of conversion, disclosed in the present invention, under a best mode scenario is discussed hereinbelow.

Referring to Figures 1, 2A, 2B and 3, the conversion process includes starting with an M113 type vehicle. The process starts with the removal of a rear portion (not shown) of the M113 vehicle. Lower hull 14 is modified to new lower hull 26. In the rear sponson areas new suspension mounting pads 25 are added. Further, new stowage area 24 and front plate 28 are mounted on upper hull 18 and new lower hull 26. The resulting structure, rear drive M113 structure 30, is shown in Figure 3.

The modified M113 provides a new driver station 27 as compared to the old driver station 17 (See Figure 1). Functionally all of the power station (not shown) installations such as the cooling system, exhaust, powertrain, air cleaners, etc., remain unchanged.
Suspension mounting pads 25 are mounted at the rear sponson. The gear (not shown) is reversed in the transmission to convert to a rear drive.

Accordingly, the rear drive M113 conversion method of the present invention is initiated by starting with a 'thick skinned' M113 which include the families of M901, M981, M577, M1059, M106, M125 and the like vehicles. All the components are removed and the vehicle is stripped to a bare aluminum hull. Top plate 16 and rear plate 12 are removed and front plate 28 is added. A new stowage area 24 is fabricated and installed as shown. The suspension components are refurbished, suspension mounting pads 25 installed and the reverse gearset (not shown) and the transmission are set in place to provide conversion to a rear drive . Further, the powertrain (not shown) is installed, the driver's station is relocated at new location 27. Finally, the vehicle is assembled to provide new rear drive M113 structure 30.

Through the conversion method disclosed herein, a capable and effective scout vehicle can be built. The rear drive M113 of the present invention enables heavy machine gun protection, modular appliqué armor, high performance suspension and powertrain. Further, it utilizes spare parts common to fielded M113 vehicle fleet and thereby enables cost effective maintenance. The final product is a light, compact and efficient tactical vehicle. The rear drive M113 is designed to be roll-on/ roll-off C-130 transportable and air dropable. Because of the light weight and efficient use of space volume, two rear drive M113 vehicles are transportable on a single C-130.

While a preferred embodiment of the rear drive M113 appreciated that various changes and modifications may be made therein within the scope of the appended claims.

## Claims

1. An overhaul and rear-drive conversion method for an armored vehicle of the M113 vehicle family comprising the steps of:
providing an armored vehicle of the M113 type, said vehicle including a front end, a rear end, a rear portion (12), an upper hull (18), and a lower hull (14) with a rear sponson area;
stripping said vehicle to a base aluminum hull including said front end, said rear end, said rear portion (12), said upper hull (18), and said lower hull (14);
removing said rear portion (12) from said base aluminum hull;
modifying the configuration of said lower hull (14);
adding suspension mounting pads (25) to each side of said modified lower hull (26) in said rear sponson area;
adding a new rear stowage area (24) to said upper hull (18) at said front end of said base aluminum hull;
adding a new front plate (28) to said modified lower hull (26) at said rear end of said base aluminum hull; and
welding together said upper hull (18), said modified lower hull (26), said top plate, said new rear stowage area (24), and said new front plate (28).

2. The method according to claim 1 wherein said conversion method includes relocating a driver's station (17, 27) of said armored vehicle.

3. The method according to claim 1 wherein said new front plate (28) includes oblique and aerodynamic surfaces.

4. The method according to claim 1 wherein said new rear stowage area (24) extends the length of said armored vehicle.

5. An overhaul and rear-drive conversion method for an armored vehicle of the Ml 13 vehicle family to develop a low-cost, light, tactical vehicle comprising the steps of:
providing an armored vehicle of the Ml 13 type, said vehicle including a front end, a rear end, a rear portion (12), a top plate (16), an upper hull (18), and a lower hull (14) with a rear sponson area;
removing said rear portion (12) and said top plate (16) from said vehicle;
modifying the configuration of said lower hull (14);
fabricating a combined new top and front plate (28);
adding said combined new top and front plate (28) to said upper hull (18) and said modified lower hull (26) at said rear end of said vehicle;
adding suspension mounting pads (25) to each side of said modified lower hull (26), in said rear sponson area;
fabricating a new rear stowage area (24);
adding said new rear stowage area (24) to said upper hull (18) at said front end of said vehicle; and
welding together said upper hull (18), said modified lower hull (26), said rear stowage area (24); and said combined new top and front plate (28).

6. The method according to claim 5 wherein said combined new top and front plate (28) is fabricated to include a driver's station (27) centrally therein.

7. The method according to claim 5 wherein said step of fabricating a combined new top and front plate (28) includes forming a combination of substantially horizontal and oblique surfaces therein.

## Patentansprüche

1. Verfahren zum Umbauen und Umwandeln in Hinterradantrieb eines gepanzerten Fahrzeugs der M113-Fahrzeugfamilie, umfassend die Schritte:
Bereitstellen eines gepanzerten Fahrzeugs der Type M113, wobei das Fahrzeug ein vorderes Ende, ein hinteres Ende, ein Heckteil (12), einen oberen Rumpf (18) und einen unteren Rumpf (14) mit einem hinteren Radkastenbereich aufweist,
Abbau des Fahrzeugs bis auf den Basis-Aluminiumrumpf, einschließlich des vorderen Endes, des hinteren Endes, des Heckteils (12), des oberen Rumpfs (18) und des unteren Rumpfs (14),
Entfernen des Heckteils (12) von dem Basis-Aluminiumrumpf,
Modifizieren der Form des unteren Rumpfs (14),
Anbringen von Anschlußstücken (25) für die Aufhängungsbefestigung an beiden Seiten des modifizierten unteren Rumpfs (26) im hinteren Radkastenbereich,
Anbringen eines neuen hinteren Verstaubereichs (24) an dem oberem Rumpf (18) am vorderen Ende des Basis-Aluminiumrumpfes,
Anbringen einer neuen Frontplatte (28) an dem modifizierten unteren Rumpf (26) am hinteren Ende des Basis-Aluminiumrumpfes und
Zusammenschweißen des oberen Rumpfes (18), des modifizierten unteren Rumpfes (26), der Deckplatte, des neuen hinteren Verstaubereichs (24) und der neuen Frontplatte (28).

2. Verfahren nach Anspruch 1, dadurch gekennzeichnet, daß das Umwandlungsverfahren das Verlegen des Fahrerplatzes (17, 27) des gepanzerten Fahrzeugs umfaßt.

3. Verfahren nach Anspruch 1, dadurch gekennzeichnet, daß die neue Frontplatte (28) schräge und aerodynamische Oberflächen aufweist.

4. Verfahren nach Anspruch 1, dadurch gekennzeichnet, daß der neue Verstaubereich (24) sich über die Länge des gepanzerten Fahrzeugs erstreckt.

5. Verfahren zum Umbauen und Umwandeln in Hinterradantrieb eines gepanzerten Fahrzeugs der M113-Fahrzeugfamilie, um ein billiges, leichtes, taktisches Fahrzeug zu entwickeln, umfassend die Schritte:
Bereitstellen eines gepanzerten Fahrzeugs der Type M113, wobei das Fahrzeug ein vorderes Ende, ein hinteres Ende, einen Heckteil (12), eine Deckplatte (16), einen oberen Rumpf (18) und einen unteren Rumpf (14) mit einem hinteren Radkastenbereich umfaßt,
Abbau des Heckteils (12) und der Frontplatte (16) von dem Fahrzeug, Modifizieren der Form des unteren Rumpfes (14),
Herstellen einer kombinierten neuen Deck- und Frontplatte (28),
Anbringen der kombinierten neuen Deck- und Frontplatte (28) an dem oberen Rumpf (18) und dem modifizierten unteren Rumpf (26) am hinteren Ende des Fahrzeugs,
Anbringen von Anschlußstücken (25) der Aufhängungsbefestigung an jeder Seite des modifizierten unteren Rumpfes (26) im Bereich des hinteren Radkastens,
Herstellen eines neuen hinteren Verstaubereichs (24),
Anbringen des neuen hinteren Staubereichs (24) an dem oberen Rumpf (18) an dem vorderen Ende des Fahrzeugs und
Zusammenschweißen des oberen Rumpfes (18), des modifizierten unteren Rumpfes (26) des hinteren Verstaubereichs (24) und der kombinierten neuen Deck- und Frontplatte (28).

6. Verfahren nach Anspruch 5, wobei die kombinierte neue Deck- und Frontplatte (28) so ausgebildet ist, daß darin zentral ein Fahrerplatz (27) vorgesehen ist.

7. Verfahren nach Anspruch 5, dadurch gekennzeichnet, daß der Schritt des Herstellens einer kombinierten neuen Deck- und Frontplatte (28) das Formen einer Kombination von im wesentlichen horizontalen und schrägen Oberflächen umfaßt.

## Revendications

1. Procédé de remise à neuf et de conversion en traction arrière pour un véhicule blindé de la famille des véhicules M113, comprenant les étapes de :
mise à disposition d'un véhicule blindé du type M113, ledit véhicule présentant une extrémité avant, une extrémité arrière, une partie arrière (12), une coque supérieure (18) et une coque inférieure (14) avec une zone de protection arrière ;
démontage dudit véhicule jusqu'à l'obtention d'une coque en aluminium de base, comprenant ladite extrémité avant, ladite extrémité arrière, ladite partie arrière (12), ladite coque supérieure (18) et ladite coque inférieure (14) ;
enlèvement, de ladite coque en aluminium de base, de ladite partie arrière (12) ;
modification de la conformation de ladite coque inférieure (14) ;
ajout de patins de montage de suspension (25) sur chaque côté de ladite coque inférieure modifiée (26), dans ladite zone de protection arrière ;
ajout d'une nouvelle zone de logement arrière (24) à ladite coque supérieure (18), au niveau de ladite extrémité avant de ladite coque en aluminium de base ;
ajout d'une nouvelle plaque frontale (28) à ladite coque inférieure modifiée (26), au niveau de ladite extrémité arrière de ladite coque en aluminium de base ; et
assemblage par soudage de ladite coque supérieure (18), de ladite coque inférieure modifiée (26), de ladite plaque de dessus, de ladite nouvelle zone de logement arrière (24) et de ladite nouvelle plaque frontale (28) .

2. Procédé selon la revendication 1, dans lequel ledit procédé de conversion comprend le changement de place d'un poste de conduite (17, 27) dudit véhicule blindé.

3. Procédé selon la revendication 1, dans lequel ladite nouvelle plaque frontale (28) comprend des surfaces obliques et aérodynamiques.

4. Procédé selon la revendication 1, dans lequel ladite nouvelle zone de logement arrière (24) s'étend sur la longueur dudit véhicule blindé.

5. Procédé de remise à neuf et de conversion en traction arrière pour un véhicule blindé de la famille des véhicules M113, afin d'obtenir un véhicule tactique léger et à faible coût, ledit procédé comprenant les étapes de :
mise à disposition d'un véhicule blindé du type M113, ledit véhicule présentant une extrémité avant, une extrémité arrière, une partie arrière (12), une plaque de dessus (16), une coque supérieure (18) et une coque inférieure (14) avec une zone de protection arrière ;
enlèvement, dudit véhicule, de ladite partie arrière (12) et de ladite plaque de dessus (16) ;
modification de la conformation de ladite coque inférieure (14) ;
fabrication d'une nouvelle plaque combinée de dessus et frontale (28) ;
ajout de ladite nouvelle plaque combinée de dessus et frontale (28) à ladite coque supérieure (18) et à ladite coque inférieure modifiée (26), au niveau de ladite extrémité arrière dudit véhicule ;
ajout de patins de montage de suspension (25) sur chaque côté de ladite coque inférieure modifiée (26), dans ladite zone de protection arrière ;
fabrication d'une nouvelle zone de logement arrière (24) ;
ajout de ladite nouvelle zone de logement arrière (24) à ladite coque supérieure (18), au niveau de ladite extrémité avant dudit véhicule ; et
assemblage par soudage de ladite coque supérieure (18), de ladite coque inférieure modifiée (26), de ladite zone de logement arrière (24) et de ladite nouvelle plaque combinée de dessus et frontale (28).

6. Procédé selon la revendication 5, dans lequel ladite nouvelle plaque combinée de dessus et frontale (28) est fabriquée de manière à comporter, au centre, un poste de conduite (27).

7. Procédé selon la revendication 5, dans lequel ladite étape de fabrication d'une nouvelle plaque combinée de dessus et frontale (28) comprend la formation, dans celle-ci, d'une combinaison de surfaces sensiblement horizontales et de surfaces obliques.
